Europäisches Patentamt

European Patent Office

Office européen des brevets

(11) Veröffentlichungsnummer: **0 386 412 B1**

(12) **EUROPÄISCHE PATENTSCHRIFT**

(45) Veröffentlichungstag der Patentschrift: **13.04.94**

(21) Anmeldenummer: **90100758.3**

(22) Anmeldetag: **15.01.90**

(51) Int. Cl.⁵: **H04L 27/12**

(54) **GMSK-Modulator.**

(30) Priorität: **09.03.89 EP 89104193**

(43) Veröffentlichungstag der Anmeldung:
**12.09.90 Patentblatt 90/37**

(45) Bekanntmachung des Hinweises auf die
Patenterteilung:
**13.04.94 Patentblatt 94/15**

(84) Benannte Vertragsstaaten:
**AT BE CH DE DK ES FR GB GR IT LI NL SE**

(56) Entgegenhaltungen:
**EP-A- 0 185 203**
**US-A- 3 969 590**

(73) Patentinhaber: **SIEMENS AKTIENGESELL-
SCHAFT**
**Wittelsbacherplatz 2**
**D-80333 München(DE)**

(72) Erfinder: **Ringelhaan, Otmar, Dipl.-Ing.**
**Zugspitzstrasse 9**
**D-8919 Greifenberg(DE)**
Erfinder: **Fenske, Horst, Dipl.-Ing.**
**Lerchenauerstrasse 43**
**D-8000 München 40(DE)**
Erfinder: **Eichiner, Gerhard, Dipl.-Phys.**
**Josef-Lutz-Weg 35**
**D-8000 München 70(DE)**

Rank Xerox (UK) Business Services
(3.10/3.09/3.3.3)

## Beschreibung

Die Erfindung bezieht sich auf eine Anordnung zur Modulation einer digitalen Nachricht nach dem GMSK-Verfahren (Gaußian Minimum Shift Keying), die durch entsprechende Aufbereitung (Vorcodierung) ein Verhalten ähnlich eines Einseitenbandmodulators aufweist.

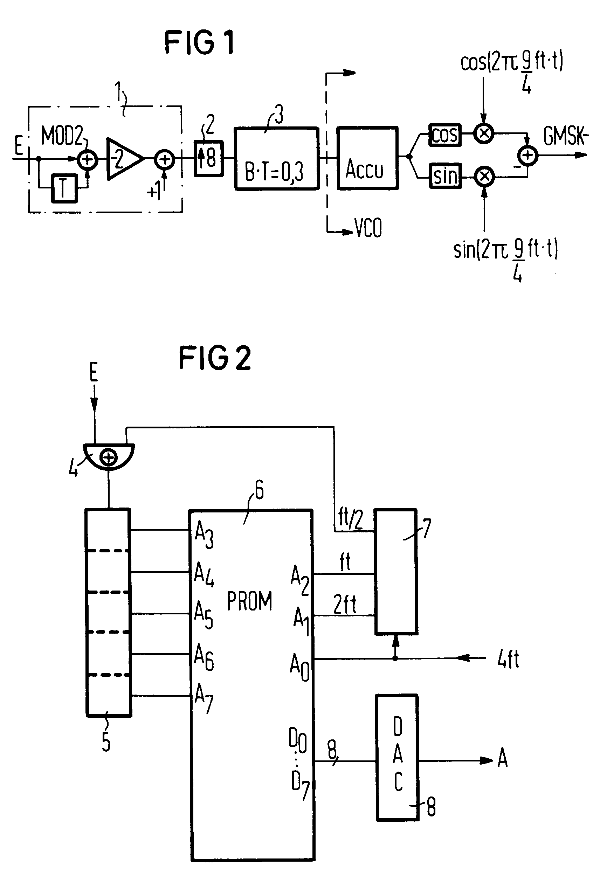

Ein Modulator für GMSK-Modulationsverfahren kann realisiert werden mit Hilfe einer Kettenschaltung aus einem Vorcodierer (PC = Precoder), einem Digital/Analog-Wandler, einem Gaußfilter und einem spannungsgesteuerten Oszillator (VCO). Eine solche Anordnung ist in Figur 1 dargestellt, wobei die einzelnen Elemente wie folgt spezifiziert sind: Der Vorcodierer ist eine Schaltung mit dem Verhalten $b_i = a_i$ EXOR $a_{i-1}$. Dabei wird das Eingangssignal zum einen direkt und zum anderen über ein Verzögerungsglied mit einer Verzögerungszeit T einem Modulo 2-Addierer zugeführt, dessen Ausgangssignal nach Multiplikation mit -2 ein +1-Signal zugeführt wird. Dadurch wird ein Bitwechsel zu -1 und ein gleichbleibendes Eingangsmuster zu +1.

Der Vorcodierer 1 ist über eine Einrichtung 2 für Oversampling mit dem Gaußfilter 3 verbunden, mit dem das Übertragungsband begrenzt und dabei das Produkt B $\cdot$ T auf beispielsweise 0,3 festgelegt wird, wobei B die Bandbreite und T = l/ft ist mit ft als Taktfrequenz. Im anschließenden spannungsgesteuerten Oszillator (VCO) mit dem Einheitsfrequenzhub h = ft/4 wird das GMSK-Signal gewonnen. Eine solche Anordnung erfordert jedoch einen hohen schaltungstechnischen Aufwand.

Durch die US-A-3 969 590 ist ein Modulationssystem bekannt, das nach dem MSK-Verfahren arbeitet und ein SAW-Filter verwendet. Ein MSK-Modulator ist ferner in der EP-A-0 185 203 beschrieben.

Beide Verfahren sind jedoch insofern sehr verschieden voneinander, als bei MSK jeweils ein Kurvenzug für ein bestimmtes Bit gilt, ein GMSK-Modulator hingegen eine Verallgemeinerung für beliebige und beliebig lange Kurvenzüge mit der dazu notwendigen Superposition (Überlagerung der Impulsantworten benachbarter Nachrichten) darstellt.

Der Erfindung liegt die Aufgabe zugrunde, zur Erzeugung eines GMSK-Signals eine Einrichtung einfacher Art zu schaffen.

Diese Aufgabe wird gemäß der Erfindung in der Weise gelöst, daß in den Eingangsbitstrom des Modulators ein jedes zweite Bit invertierendes, zur Seitenbandumkehrung vorgesehenes XOR-Gatter eingeschaltet ist, dessen Ausgang über ein mit seinen Anzapfungen mit Adreßanschlüssen eines PROM's verbundenes Schieberegister verbunden ist, daß im PROM eine Impulsantwortfunktion des Modulators bezüglich einer Zwischenfrequenz abgespeichert ist und daß die Zwischenfrequenz des erzeugten Einseitenband-Spektrums (Modulatorausgangsfrequenz) so gewählt ist, daß sie der Bedingung

$$f (ZF) = ft/4 + n \cdot ft/2 \text{ für } n \geq 1$$

genügt, bei der das System eine eindeutig definierte Impulsantwort aufweist, wobei ft die Taktfrequenz ist.

Überlegungen im Rahmen der Erfindung haben gezeigt, daß jedes Eingangsbit die Phase um ein Vielfaches von $2\pi$ drehen muß (nicht um $\pi/2$ wie im Basisband-Originalzustand), damit das System eine eindeutig definierte Stoßantwort aufweist. Da die Vorcodierung nur Symbolwechsel überträgt und zu jedem Eingangssymbol zwei mögliche Wechsel gehören, verdoppelt sich die Phasendrehung auf $\pi$. Durch einen Frequenzoffset von ft/4 verdoppelt sich die Phasendrehung pro Symbol nochmals, wodurch eine Phasendrehung von insgesamt $2\pi$ entsteht. Durch Einführung eines Offsets erhält man also ein System, welches einem Eingangssignal eindeutig ein Ausgangssignal zuordnet. Das nun entstandene Signal stellt jetzt ein GMSK-Signal bezüglich eines versetzten Trägers dar.

Vorteilhafte Ausgestaltungen und Weiterbildungen des Erfindungsgegenstandes sind in den Unteransprüchen angegeben.

Nachstehend wird die Erfindung anhand eines in Figur 2 dargestellten Ausführungsbeispiels näher erläutert.

Der Eingang E des GMSK-Modulators ist an den einen Eingang eines XOR-Gatters 4 geführt, dessen zweiter Eingang mit einem Zähler 7 (im Beispiel ein 3Bit-Zähler) verbunden ist. Der Ausgang des XOR-Gatters 4 ist an ein Schieberegister 5 angeschlossen. Die Länge des Schieberegisters hängt dabei von der Wortlänge des verwendeten Digital/Analog-Wandlers ab. Für 8 Bit und B $\cdot$ T = 0,3 benötigt man ein vier- bis fünfstufiges Schieberegister. Im Ausführungsbeispiel ist ein 5 Bit-Schieberegister vorgesehen. Die einzelnen Anzapfungen des Schieberegisters 5 sind mit den Adreßanschlüssen $A_3$ bis $A_7$ eines PROM 6 verbunden. Zur Schaffung der Bit-Zwischenwerte dient der Zähler 7, an dessen Eingang die Frequenz 4ft anliegt, die zugleich an den Adreßanschluß $A_0$ des PROM 6 geführt ist. Die Ausgänge des Zählers für die Frequenz 2ft und ft sind mit den Adreßanschlüssen $A_1$ und $A_2$ des PROM 6 verbunden, der Ausgang für die Frequenz ft/2 ist an den zweiten Eingang des XOR-Gatters 4 geführt. Die Ausgangsanschlüsse $D_0$ bis $D_7$ des PROM 6 sind über Leitungen mit dem Digital/Analog-Wandler 8 verbunden, dessen Ausgang A den Modulatorausgang bildet.

Da die Vorcodierung bewirkt, daß die gesamte Anordnung ein Verhalten ähnlich eines Einseitenbandmodulators aufweist, wird dieses Verhalten auch mit den Mitteln der Einseitenbandtechnik realisiert. Unter bestimmten Voraussetzungen hat ein digitaler Einseitenbandmodulator die Eigenschaft, für jedes eingegebene Zeichen an seinen Ausgang dieselbe Zeitfunktion abzugeben, deren Amplitude mit derjenigen des Zeichens moduliert ist, weshalb dann so ein Modulator mit Hilfe eines einfachen Transversalfilters realisiert werden kann. Die dabei angesprochenen Voraussetzungen betreffen die Wahl der Bandmittenfrequenz des erzeugten ESB-Spektrums, für die die erforderliche Bedingung vorstehend genannt wurde. Unter diesen Voraussetzungen kann also ein GMSK-Modulator ebenfalls mit Hilfe eines einfachen Transversalfilters realisiert werden, wobei die Filterkoeffizienten aus der Impulsantwort der ursprünglichen Anordnung ermittelt werden. Um den Inhalt des PROM zu erhalten, werden die Abtastwerte des GMSK-Signals für alle $2^L$ (L = Länge des Schieberegisters) Bit-Kombinationen berechnet und im PROM abgelegt.

## Patentansprüche

1. Anordnung zur Modulation einer digitalen Nachricht nach dem GMSK-Verfahren (Gaußian Minimum Shift Keying), die durch entsprechende Aufbereitung (Vorcodierung) ein Verhalten ähnlich eines Einseitenbandmodulators aufweist,
   **dadurch gekennzeichnet,**
   daß in den Eingangsbitstrom des Modulators ein jedes zweite Bit invertierendes, zur Seitenbandumkehrung vorgesehenes XOR-Gatter (4) eingeschaltet ist, dessen Ausgang über ein mit seinen Anzapfungen mit Adreßanschlüssen ($A_3$ bis $A_7$) eines PROM's (6) verbundenes Schieberegister (5) verbunden ist, daß im PROM (6) eine Impulsantwortfunktion des Modulators bezüglich einer Zwischenfrequenz abgespeichert ist und daß die Zwischenfrequenz des erzeugten Einseitenband-Spektrums (Modulatorausgangsfrequenz) so gewählt ist, daß sie der Bedingung

   $$f(ZF) = ft/4 + n \cdot ft/2 \text{ für } n \geq 1$$

   genügt, bei der das System eine eindeutig definierte Impulsantwort aufweist, wobei ft die Taktfrequenz ist.

2. Anordnung nach Anspruch 1,
   **gekennzeichnet durch**
   einen von einer vervielfachten Taktfrequenz gespeisten m-Bit-Zähler (7) zur Schaffung von Bit-Zwischenwerten, der an den zweiten Eingang des XOR-Gatters (4) angeschlossen ist.

3. Anordnung nach Anspruch 1 oder 2,
   **dadurch gekennzeichnet,**
   daß der Modulator mit Hilfe eines Transversalfilters realisiert ist.

## Claims

1. Arrangement for modulating a digital message according to the GMSK method (Gaußian Minimum Shift Keying), which exhibits a behaviour similar to a single sideband modulator by means of corresponding conditioning (precoding), characterized in that interposed in the input bit stream of the modulator is an XOR gate (4) which inverts every second bit and is provided for sideband reversal, the output of which gate is connected to a shift register (5) connected by its tappings to address terminals ($A_3$ to $A_7$) of a PROM (6), in that an impulse response function of the modulator with respect to an intermediate frequency is stored in the PROM (6), and in that the intermediate frequency of the generated single sideband spectrum (modulator output frequency) is selected so that it satisfies the condition

   $$f(ZF) = ft/4 + n \cdot ft/2 \text{ for } n \geq 1$$

   in which the system has a clearly defined impulse response, where ft is the clock frequency.

2. Arrangement according to Claim 1, characterized by an m-bit counter (7) for generating intermediate bit values which is fed by a multiplied clock frequency and which is connected to the second input of the XOR gate (4).

3. Arrangement according to Claim 1 or 2, characterized in that the modulator is realized with the aid of a transversal filter.

## Revendications

1. Dispositif pour moduler une information numérique conformément au procédé GMSK (Gaussian Minimum Schift Keying), qui, moyennant une préparation correspondante (codage préalable), possède un comportement semblable à celui d'un modulateur de bande latérale unique, caractérisé par le fait que dans la voie de transmission des bits d'entrée du modulateur est branchée une seconde porte OU-EXCLUSIF qui inverse chaque second bit et est destinée à réaliser une inversion de la bande latérale et dont la sortie est raccordée, à un registre à décalage (5) qui est relié par ses prises à des bornes ($A_3$ à $A_7$) de transmission d'adresses d'une mémoire PROM (6), qu'une fonction de réponse impulsionnelle du modulateur en rapport avec une fréquence intermédiaire est mémorisée dans la mémoire PROM (6) et que la fréquence intermédiaire du spectre de bande latérale unique produit (fréquence de sortie du modulateur) est choisie de manière à satisfaire à la condition :

f (ZF) = ft/4 + n.ft/2 pour n ≥ 1

pour laquelle le système possède une réponse impulsionnelle définie de façon nette, ft représentant la fréquence de cadence.

2. Dispositif suivant la revendication 1, caractérisé par un compteur (7) à m bits, qui est alimenté par une fréquence de cadence multiple et sert à créer des valeurs intermédiaires de bits et qui est raccordé à la seconde entrée de la porte OU-EXCLUSIF (4).

3. Dispositif suivant la revendication 1 ou 2, caractérisé par le fait que le modulateur est réalisé à l'aide d'un filtre transversal.

# FIG 1

# FIG 2